# EUROPEAN PATENT SPECIFICATION

(11) **EP 3 730 313 B1**
(45) Date of publication and mention of the grant of the patent: **14.04.2021**
(21) Application number: 20157977.8
(22) Date of filing: 18.02.2020
(51) Int. Cl.: B60C 9/04, B60C 9/18, B60C 15/00

(54) **MOTORCYCLE TIRE**
MOTORRADREIFEN
PNEUMATIQUE DE MOTO

(30) Priority: 20.02.2019 JP 2019028730
(43) Date of publication of application: 28.10.2020
(73) Proprietor: SUMITOMO RUBBER INDUSTRIES, LTD., Chuo-ku Kobe-shi Hyogo 651-0072 (JP)
(72) Inventor: KONO, Kyosuke, Kobe-shi, Hyogo 651-0072 (JP)
(74) Representative: TBK

(56) References cited:
- EP-A1- 1 475 249
- EP-A1- 3 421 268

## Description

### BACKGROUND OF THE INVENTION

### Field of the Invention

The present invention relates to a motorcycle tire.

### Description of the Background Art

Japanese Laid-Open Patent Publication No. 2008-302871 discloses a motorcycle pneumatic tire that includes: a first carcass ply extended on and between beads; and a second carcass ply positioned outward of the first carcass ply in the radial direction. The first carcass ply includes a body and a pair of turned-up portions continuous from both ends of the body. Ends of the second carcass ply are each disposed between the turned-up portion and the body of the first carcass ply

Motorcycle pneumatic tires according to the preamble of claim 1 are further known from EP 1475249 A1 and EP 3421268 A1.

### SUMMARY OF THE INVENTION

Although the motorcycle pneumatic tires as described above have excellent steering stability, there is room for improvement in ride comfort and ground contact feeling.

The present invention has been made in consideration of the above problems. A main object of the present invention to provide a motorcycle tire that can improve ride comfort and ground contact feeling while maintaining steering stability.

The present invention is a motorcycle tire having a carcass. The carcass includes a carcass ply that is a layer of carcass cords. The carcass ply includes a first ply, and a second ply layered on the first ply in a tire radial direction. The first ply includes: a toroidal body portion extending from a tread portion through sidewall portions to bead cores of bead portions; and turned-up portions turned up around the bead cores from an inner side to an outer side in a tire axial direction. The second ply is formed as a portion extending from the tread portion toward the bead portions and terminating without being turned up around the bead cores. A thickness of each carcass cord of the second ply is smaller than a thickness of each carcass cord of the first ply.

Preferably, in the motorcycle tire according to the present invention, the carcass cord is formed from an organic fiber.

Preferably, in the motorcycle tire according to the present invention, the second ply is disposed outward of the first ply in the tire radial direction.

Preferably, in the motorcycle tire according to the present invention, the thickness of the carcass cord of the first ply is not less than 1.4 times the thickness of the carcass cord of the second ply.

Preferably, in the motorcycle tire according to the present invention, the thickness of the carcass cord of the first ply is not less than 1300 dtex.

Preferably, in the motorcycle tire according to the present invention, an angle of each carcass cord relative to a tire equator is 65 to 90 degrees.

Preferably, in the motorcycle tire according to the present invention, an angle θ1 of the carcass cord of the first ply relative to a tire equator is greater than an angle θ2 of the carcass cord of the second ply relative to the tire equator.

Preferably, in the motorcycle tire according to the present invention, a difference (θ1-θ2) between the angle θ1 of the carcass cord of the first ply relative to the tire equator and the angle θ2 of the carcass cord of the second ply relative to the tire equator is 4 to 20 degrees.

Preferably, in the motorcycle tire according to the present invention, first ends, which is the number of the carcass cords per unit periphery length of the first ply, is greater than second ends, which is the number of the carcass cords per unit periphery length of the second ply.

Preferably, in the motorcycle tire according to the present invention, inner ends of the second ply are positioned inward of tire maximum width positions in the tire radial direction.

Preferably, in the motorcycle tire according to the present invention, each turned-up portion of the first ply overlaps the second ply by not less than 10 mm in the tire radial direction.

Preferably, in the motorcycle tire according to the present invention, a tread reinforcing layer is provided outward of the carcass in the tire radial direction and inside the tread portion, and outer ends in the tire radial direction of the turned-up portions of the first ply are positioned outward of, in the tire radial direction, outer ends in the tire axial direction of the tread reinforcing layer.

The carcass ply of the motorcycle tire of the present invention includes a first ply of which both ends are turned up around bead cores, and a second ply of which both ends terminate without being turned up around the bead cores. The thickness of each carcass cord of the second ply is smaller than the thickness of each carcass cord of the first ply. Due to this configuration, in the present invention, high stiffness of the sidewall portions and the bead portions is maintained to suppress decrease in steering stability, and excessive increase in stiffness of the tread portion is suppressed. Accordingly, ride comfort and ground contact feeling are enhanced.

### BRIEF DESCRIPTION OF THE DRAWINGS

FIG. 1 is a tire meridian cross-sectional view of a motorcycle pneumatic tire of the present invention;
FIG. 2 is a development including a carcass shown in FIG. 1; and
FIG. 3 is an enlarged view of FIG. 1.

### DESCRIPTION OF THE PREFERRED EMBODIMENTS

Hereinafter, an embodiment of the present invention will be described with reference to the drawings.

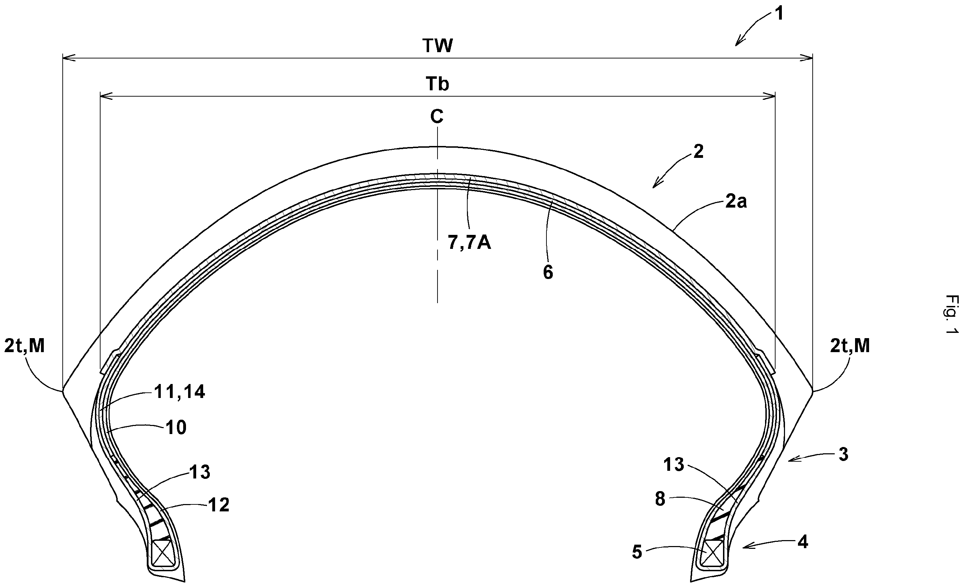

FIG. 1 is a tire meridian cross-sectional view, including a tire rotation axis (not shown), of a motorcycle tire (hereinafter, sometimes simply referred to as "tire") 1 in a normal state according to the present embodiment. FIG. 1 shows the tire 1 that is appropriate for a motorcycle for on-road racing, for example. However, the tire 1 of the present invention is not limited to such a form, and is employed in various motorcycles including off-road types, for example.

The "normal state" represents a state in which the tire 1 is mounted to a normal rim (not shown) and inflated with air to a normal internal pressure and no load is applied to the tire 1. In the present specification, unless otherwise specified, dimensions and the like of components of the tire 1 are values identified in the normal state.

The "normal rim" represents a rim that is defined, in a standard system including a standard with which the tire 1 complies, by the standard for each tire, and is, for example, the "standard rim" in the JATMA standard, the "Design Rim" in the TRA standard, or the "Measuring Rim" in the ETRTO standard.

The "normal internal pressure" represents an air pressure that is defined, in a standard system including a standard with which the tire 1 complies, by the standard for each tire, and is the "maximum air pressure" in the JATMA standard, the "maximum value" recited in the table "TIRE LOAD LIMITS AT VARIOUS COLD INFLATION PRESSURES" in the TRA standard, or the "INFLATION PRESSURE" in the ETRTO standard.

In the tire 1 of the present embodiment, a tread ground-contact surface 2a between tread ends 2t, 2t of a tread portion 2 extends so as to be curved in an arc shape that is convex outward in the tire radial direction, so that the tread ground-contact surface 2a can have a sufficient ground-contact area also during cornering in which a camber angle is increased. The distance in the tire axial direction between the tread ends 2t, 2t is a tread width TW. In the tire 1 of the present embodiment, the tread end 2t corresponds to a tire maximum width position M.

The tire 1 includes a toroidal carcass 6 extending from the tread portion 2 through sidewall portions 3 to bead portions 4. A bead core 5 and a bead apex rubber 8 are embedded in each bead portion 4 of the present embodiment.

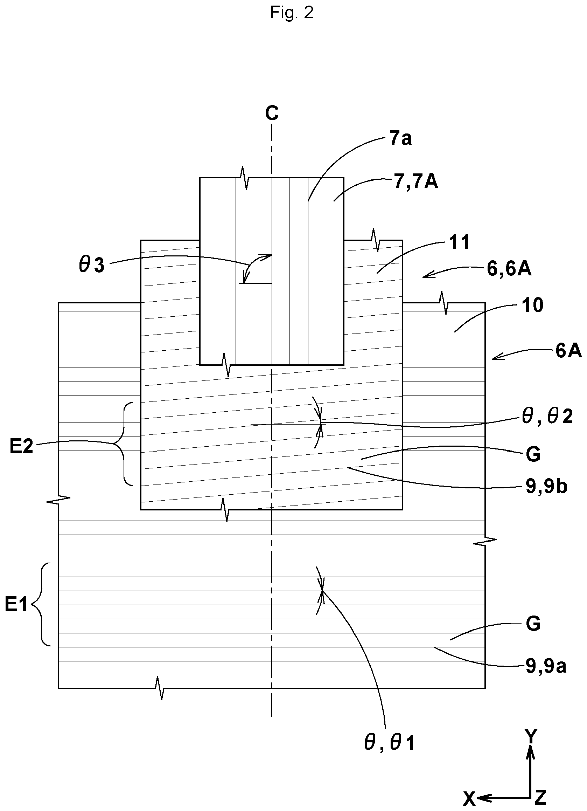

FIG. 2 is a development including the carcass 6. As shown in FIG. 2, the carcass 6 includes a carcass ply 6A, which is a layer of carcass cords 9. The carcass ply 6A is composed of carcass cords 9 aligned with each other, and a topping rubber G covering the carcass cords 9. As the carcass cord 9, for example, an organic fiber such as nylon fibers, rayon fibers, or aromatic polyamide fibers is suitable. Such a carcass cord 9 has large compressive stress and improves durability performance. In FIG. 2, the X direction represents the tire axial direction, the Y direction represents the tire circumferential direction, and the Z direction represents the tire radial direction.

The carcass ply 6A of the present embodiment is composed of a first ply 10, and a second ply 11 layered on the first ply 10 in the tire radial direction.

The first ply 10 of the present embodiment includes a toroidal body portion 12 (shown in FIG. 1) and turned-up portions 13. The body portion 12 extends from the tread portion 2 through sidewall portions 3 to the bead cores 5 of the bead portions 4. The turned-up portions 13 are continuous from the body portion 12 and are turned up around the bead cores 5 from the inner side to the outer side in the tire axial direction. In the present embodiment, the turned-up portions 13 are provided on both sides in the tire axial direction of the body portion 12. The second ply 11 of the present embodiment is formed as a portion 14 extending from the tread portion 2 toward the bead portions 4 and terminating without being turned up around the bead cores 5.

In the present embodiment, the thickness (not shown) of carcass cords 9b of the second ply 11 is smaller than the thickness of carcass cords 9a of the first ply 10. Accordingly, in the tire 1 of the present embodiment, high stiffness of the sidewall portion 3 and the bead portion 4 is maintained to suppress decrease in steering stability, and excessive increase in stiffness of the tread portion 2 is suppressed. Accordingly, ride comfort and ground contact feeling are enhanced.

The thickness of the carcass cord 9a of the first ply 10 is preferably not less than 1.4 times the thickness of the carcass cord 9b of the second ply 11. Accordingly, effects described above are exhibited in a good balance. When the thickness of the carcass cord 9b of the second ply 11 is excessively smaller than the thickness of the carcass cord 9a of the first ply 10, stiffness of the tread portion 2 cannot be increased, which could result in a decreased level of improvement of steering stability. Therefore, the thickness of the carcass cord 9a of the first ply 10 is preferably not greater than 2.8 times the thickness of the carcass cord 9b of the second ply 11.

In order to ensure improvement in steering stability, the thickness of the carcass cord 9a of the first ply 10 is preferably not less than 1300 dtex. In order to enhance ride comfort and ground contact feeling, the thickness of the carcass cord 9a of the first ply 10 is preferably not greater than 2600 dtex.

An angle θ of the carcass cord 9 relative to a tire equator C is 65 to 90 degrees. Such a carcass cord 9 appropriately decreases stiffness in the tire axial direction of the tread portion 2, and enhances ride comfort and ground contact feeling.

An angle θ1 of the carcass cord 9a of the first ply 10 relative to the tire equator C is preferably greater than an angle θ2 of the carcass cord 9b of the second ply 11 relative to the tire equator C. Such a configuration maintains low stiffness in the tire axial direction of the sidewall portion 3 and the bead portion 4, thereby further enhancing ride comfort and ground contact feeling. The second ply 11 increases stiffness in the tire circumferential direction, thereby improving stability during straight running.

When the difference (θ1-θ2) between the angle θ1 of the first ply 10 and the angle θ2 of the second ply 11 is large, stiffness in the tire circumferential direction is increased, which could result in impaired ride comfort and ground contact feeling. For effective realization of the effects, the difference (θ1-θ2) between the angle θ1 of the first ply 10 and the angle θ2 of the second ply 11 is preferably 4 to 20 degrees.

When the angle θ1 of the carcass cord 9a of the first ply 10 is not 90 degrees, the carcass cord 9b of the second ply 11 is preferably tilted relative to the tire axial direction in a direction opposite to the carcass cord 9a of the first ply 10. Accordingly, the lateral forces, during running, that are caused by the carcass cord 9a of the first ply 10 and the carcass cord 9b of the second ply 11 are cancelled out. Thus, a high level of steering stability is maintained.

A first ends E1, which is the number of carcass cords 9a per unit periphery length of the first ply 10 is preferably greater than a second ends E2, which is the number of carcass cords 9b per unit periphery length of the second ply 11. Accordingly, decrease in stiffness of the sidewall portion 3 and the bead portion 4 is suppressed, and thus, a high level of steering stability is maintained. In addition, appropriate decrease in stiffness of the tread portion 2 is maintained. Although not limited in particular, the first ends E1 per periphery length of 50 mm of the first ply 10 is preferably 34 to 57. The second ends E2 per periphery length of 50 mm of the second ply 11 is preferably 30 to 53. In the present specification, the "periphery length" is a length measured along the carcass 6 at a tire meridian cross-section in the normal state.

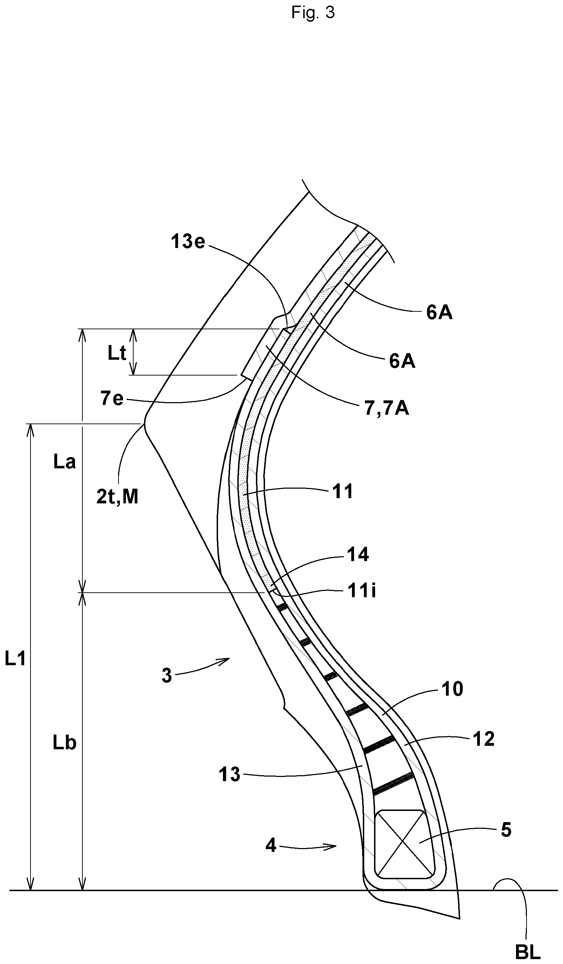

FIG. 3 is an enlarged view of the sidewall portion 3 side in FIG. 1. As shown in FIG. 3, the second ply 11 of the present embodiment is disposed outward of the first ply 10 in the tire radial direction. Since the first ply 10 is held by the second ply 11 from outside in the tire radial direction, holding force in the tire circumferential direction is generated, and thus, straight running stability can be enhanced. For convenience, the second ply 11 is colored in FIG. 3.

In the present embodiment, inner ends 11i of the second ply 11 are positioned inward of the tire maximum width positions M in the tire radial direction. Such a second ply 11 increases stiffness of the sidewall portions 3 and improves steering stability.

The turned-up portion 13 of the first ply 10 and the second ply 11 overlap each other by a distance La of not less than 10 mm in the tire radial direction. Accordingly, stiffness of the sidewall portion 3 is further increased. When the distance La is increased, stiffness of the sidewall portion 3 is excessively increased, which could result in impaired ride comfort and ground contact feeling. Thus, the distance La is preferably not greater than 60% of a length L1 in the tire radial direction between a bead base line BL and the tread end 2t, and more preferably not greater than 40%. The bead base line BL is the tire axial direction line at the rim diameter defined in the JATMA standard mentioned above.

Although not limited in particular, a length Lb in the tire radial direction between the inner end 11i of the second ply 11 and the bead base line BL is preferably 40% to 80% of the length L1 in the tire radial direction.

As shown in FIG. 1 to FIG. 3, in the tire 1 of the present embodiment, a tread reinforcing layer 7 is provided outward of the carcass 6 in the tire radial direction and inside the tread portion 2.

The tread reinforcing layer 7 is composed of at least one reinforcing ply 7A (one reinforcing ply 7A in the present embodiment) in which reinforcing cords 7a are disposed at an angle θ3 of, for example, not greater than 30 degrees relative to the tire equator C. As the reinforcing cord 7a, a steel cord or a highly elastic organic fiber cord such as a rayon fiber cord or an aromatic polyamide fiber cord is suitable. Such a tread reinforcing layer 7 exhibits a binding effect and enhances steering stability during running. The angle θ3 of the reinforcing cord 7a is preferably not greater than 20 degrees and more preferably not greater than 10 degrees. In the present embodiment, the angle θ3 of the reinforcing cord 7a is 0 degrees.

A width Tb in the tire axial direction of the tread reinforcing layer 7 is preferably 85% to 95% of the tread width TW. Such a tread reinforcing layer 7 exhibits the above-described effects over the entire region of the tread portion 2.

An outer end 13e in the tire radial direction of the turned-up portion 13 of the first ply 10 is preferably positioned outward of, in the tire radial direction, an outer end 7e in the tire axial direction of the tread reinforcing layer 7. Accordingly, stiffness in the vicinity of the tread end 2t of the tread portion 2 is increased, cornering power during cornering in which the camber angle is large is increased, and steering stability is improved. When the outer end 13e of the turned-up portion 13 is positioned too much on the outer side in the tire radial direction, ride comfort and ground contact feeling could be significantly impaired. Therefore, a length Lt in the tire radial direction between the outer end 13e of the turned-up portion 13 and the outer end 7e is preferably 20% to 35% of the length L1 in the tire radial direction.

Although the tire according to the embodiment of the present invention has been described in detail above, the present invention is not limited to the above specific embodiment, and various modifications can be made to implement the present invention within the scope of the appended claims.

### EXAMPLES

Tires having the fundamental structure in FIG. 1 and the carcass ply in FIG. 2 were produced as samples, and steering stability, ride comfort, ground contact feeling, and puncture resistance of each sample tire were tested. Common specifications and test methods of the sample tires are as follows.

### <Steering stability, ride comfort, and ground contact feeling>

Each sample tire was mounted to a rear wheel of a motorcycle for on-road racing under the following conditions. A test rider rode the motorcycle on an on-road circuit course, and made sensory evaluations on steering stability, ride comfort, and ground contact feeling during straight running and during cornering. The results are shown in values with the maximum score set at 5. The greater the value is, the better.
Tire size: 120/70ZR17 (front wheel), 200/55ZR17 (rear wheel)
Rim size: MT3.50x 17 (front wheel), MT6.00× 17 (rear wheel)
Internal pressure: 250 kPa (front wheel), 290 kPa (rear wheel)
Engine displacement: 1000 cc

The tires for the front wheel all have the same specifications. In addition, specifications not indicated in Table 1 are all the same.

### <Durability performance (plunger index)>

Each sample tire was subjected to a plunger test according to JIS D4230, section 5.1 "Tire strength (breaking energy) test" under the following conditions. The results are represented by actual values of breaking energy. The greater the value, the better.
Tire size: 200/55ZR17
Rim size: MT6.00×17
Internal pressure: 290 kPa

In Table 1, "A1" is the distance in the tire radial direction between the bead base line and the outer end of the turned-up portion, "A2" is the distance in the tire radial direction between the bead base line and the inner end of the second ply, and "A3" is the distance in the tire radial direction between the bead base line and the outer end of the tread reinforcing layer.

In Table 1, "first ends" and "second ends" are each the number of carcass cords per periphery length of 50 mm.

In Examples 4 and 5, the carcass cord of the first ply is tilted in the direction opposite to the carcass cord of the second ply with respect to the tire axial direction.

The results of the test are shown in Table 1.

**[Table 1]**

| | | Comparative Example 1 | Conventional Example 1 | Example 1 | Example 2 | Example 3 | Example 4 | Example 5 | Example 6 | Example 7 |
|---|---|---|---|---|---|---|---|---|---|---|
| First ply | Material | nylon | nylon | nylon | rayon | rayon | nylon | nylon | rayon | nylon |
| | Cord thickness (dtex) | 1400 | 1400 | 2100 | 1840 | 1840 | 2100 | 2100 | 1840 | 1400 |
| | θ1 (degree) | 86 | 90 | 90 | 90 | 90 | 86 | 86 | 90 | 90 |
| | First ends | 51 | 51 | 46 | 51 | 51 | 46 | 51 | 51 | 51 |
| | A1 (mm) | 45 | 45 | 45 | 45 | 55 | 45 | 45 | 45 | 55 |
| Second ply | Material | nylon | - | nylon | nylon | nylon | nylon | nylon | nylon | nylon |
| | Cord thickness (dtex) | 1400 | - | 1400 | 940 | 940 | 1400 | 1400 | 940 | 940 |
| | θ2 (degree) | 86 | - | 86 | 86 | 86 | 86 | 90 | 65 | 86 |
| | Second ends | 51 | - | 51 | 53 | 48 | 51 | 46 | 53 | 48 |
| | A2 (mm) | 30 | - | 30 | 30 | 30 | 45 | 30 | 30 | 30 |
| Tread reinforcing layer | Tb/TW (%) | 95 | 95 | 95 | 95 | 90 | 95 | 95 | 95 | 90 |
| | A3 (mm) | 47 | 47 | 47 | 47 | 51 | 47 | 47 | 47 | 51 |
| La (mm) | | 15 | - | 15 | 15 | 25 | 0 | 15 | 15 | 15 |
| Steering stability during straight -ming [maximum score: 5] | | 3.75 | 3.00 | 3.75 | 3.75 | 3.75 | 3.75 | 3.50 | 3.75 | 3.50 |
| Steering stability during cornering [maximum score: 5] | | 3.75 | 3.00 | 3.50 | 3.50 | 3.75 | 3.25 | 3.75 | 3.25 | 3.50 |
| Ride comfort [maximum score: 5] | | 2.50 | 3.25 | 3.50 | 3.75 | 4.00 | 3.50 | 3.50 | 3.25 | 4.00 |
| Ground contact feeling [maximum score: 5] | | 3.00 | 3.50 | 3.50 | 3.75 | 4.00 | 3.50 | 3.25 | 3.50 | 4.00 |
| Durability performance [J] | | 53 | 36 | 55 | 50 | 49 | 55 | 55 | 50 | 49 |

From the results of the test, it was confirmed that the tires of Examples have improved ride comfort and ground contact feeling while steering stability is maintained, when compared with the tire of Comparative Example.

In the present invention, ride comfort and ground contact feeling are improved while steering stability is maintained.

Provided is a motorcycle tire 1 having a carcass 6 including a carcass ply 6A. The carcass ply 6A includes a first ply 10, and a second ply 11 layered on the first ply in the tire radial direction. The first ply 10 includes a toroidal body portion 12, and turned-up portions 13 turned up around bead cores 5. The second ply 11 is formed as a portion 14 that terminates without being turned up around the bead cores 5. The thickness of a carcass cord 9b of the second ply 11 is smaller than the thickness of a carcass cord 9a of the first ply 10.

## Claims

1. A motorcycle tire (1) having a carcass (6), wherein
the carcass (6) includes a carcass ply (6A) that is a layer of carcass cords (9), the carcass ply (6A) includes a first ply (10), and a second ply (11) layered on the first ply (10) in a tire radial direction,
the first ply (10) includes: a toroidal body portion (12) extending from a tread portion (2) through sidewall portions (3) to bead cores (5) of bead portions (4); and turned-up portions (13) turned up around the bead cores (5) from an inner side to an outer side in a tire axial direction,
the second ply (11) is formed as a portion (14) extending from the tread portion (2) toward the bead portions (4) and terminating without being turned up around the bead cores (5), the tire being **characterized in that** a thickness of each carcass cord (9b) of the second ply (11) is smaller than a thickness of each carcass cord (9a) of the first ply (10).

2. The motorcycle tire (1) according to claim 1, wherein
the carcass cord (9) is formed from an organic fiber.

3. The motorcycle tire (1) according to claim 1 or 2, wherein
the second ply (11) is disposed outward of the first ply (10) in the tire radial direction.

4. The motorcycle tire (1) according to any one of claims 1 to 3, wherein
the thickness of the carcass cord (9a) of the first ply (10) is not less than 1.4 times the thickness of the carcass cord (9b) of the second ply (11).

5. The motorcycle tire (1) according to any one of claims 1 to 4, wherein
the thickness of the carcass cord (9a) of the first ply (10) is not less than 1300 dtex.

6. The motorcycle tire (1) according to any one of claims 1 to 5, wherein
an angle of each carcass cord (9) relative to a tire equator (C) is 65 to 90 degrees.

7. The motorcycle tire (1) according to any one of claims 1 to 6, wherein
an angle θ1 of the carcass cord (9a) of the first ply (10) relative to a tire equator (C) is greater than an angle θ2 of the carcass cord (9b) of the second ply (11) relative to the tire equator (C).

8. The motorcycle tire (1) according to claim 7, wherein
a difference (θ1-θ2) between the angle θ1 of the carcass cord (9a) of the first ply (10) relative to the tire equator (C) and the angle θ2 of the carcass cord (9b) of the second ply (11) relative to the tire equator (C) is 4 to 20 degrees.

9. The motorcycle tire (1) according to any one of claims 1 to 8, wherein
first ends (E1), which is the number of the carcass cords (9a) per unit periphery length of the first ply (10), is greater than second ends (E2), which is the number of the carcass cords (9b) per unit periphery length of the second ply (11).

10. The motorcycle tire (1) according to any one of claims 1 to 9, wherein
inner ends (11i) of the second ply (11) are positioned inward of tire maximum width positions (M) in the tire radial direction.

11. The motorcycle tire (1) according to any one of claims 1 to 10, wherein
each turned-up portion (13) of the first ply (10) overlaps the second ply (11) by not less than 10 mm in the tire radial direction.

12. The motorcycle tire (1) according to any one of claims 1 to 11, wherein
a tread reinforcing layer (7) is provided outward of the carcass (6) in the tire radial direction and inside the tread portion (2), and
outer ends (13e) in the tire radial direction of the turned-up portions (13) of the first ply (10) are positioned outward of, in the tire radial direction, outer ends (7e) in the tire axial direction of the tread reinforcing layer (7).

## Patentansprüche

1. Motorradreifen (1), der eine Karkasse (6) hat, wobei
die Karkasse (6) eine Karkassenlage (6A) umfasst, die eine Schicht von Karkassenkorden (9) ist,
die Karkassenlage (6A) eine erste Lage (10) und eine zweite Lage (11) umfasst, die in einer Reifenradialrichtung auf der ersten Lage (10) geschichtet ist,
die erste Lage (10) umfasst: einen toroidalen Körperabschnitt (12), der sich von einem Laufflächenabschnitt (2) durch Seitenwandabschnitte (3) zu Wulstkernen (5) von Wulstabschnitten (4) erstreckt; und umgeschlagene Abschnitte (13), die um die Wulstkerne (5) von einer inneren Seite zu einer äußeren Seite in einer Reifenaxialrichtung umgeschlagen sind,
die zweite Lage (11) als ein Abschnitt (14) ausgebildet ist, der sich von dem Laufflächenabschnitt (2) in Richtung der Wulstabschnitte (4) erstreckt und endet, ohne dass er um die Wulstkerne (5) umgeschlagen ist,
wobei der Reifen **dadurch gekennzeichnet ist, dass**
eine Dicke jedes Karkassenkords (9b) der zweiten Lage (11) kleiner ist als eine Dicke jedes Karkassenkords (9a) der ersten Lage (10).

2. Motorradreifen (1) gemäß Anspruch 1, wobei
der Karkassenkord (9) aus einer organischen Faser ausgebildet ist.

3. Motorradreifen (1) gemäß Anspruch 1 oder 2, wobei
die zweite Lage (11) in der Reifenradialrichtung auswärts der ersten Lage (10) angeordnet ist.

4. Motorradreifen (1) gemäß einem der Ansprüche 1 bis 3, wobei
die Dicke des Karkassenkords (9a) der ersten Lage (10) nicht kleiner ist als 1,4-mal die Dicke des Karkassenkords (9b) der zweiten Lage (11).

5. Motorradreifen (1) gemäß einem der Ansprüche 1 bis 4, wobei
die Dicke des Karkassenkords (9a) der ersten Lage (10) nicht kleiner ist als 1300 dtex.

6. Motorradreifen (1) gemäß einem der Ansprüche 1 bis 5, wobei ein Winkel jedes Karkassenkords (9) relativ zu einem Reifenäquator (C) 65 bis 90 Grad ist.

7. Motorradreifen (1) gemäß einem der Ansprüche 1 bis 6, wobei
ein Winkel θ1 des Karkassenkords (9a) der ersten Lage (10) relativ zu einem Reifenäquator (C) größer ist als ein Winkel θ2 des Karkassenkords (9b) der zweiten Lage (11) relativ zu dem Reifenäquator (C).

8. Motorradreifen (1) gemäß Anspruch 7, wobei
eine Differenz (θ1-θ2) zwischen dem Winkel θ1 des Karkassenkords (9a) der ersten Lage (10) relativ zu dem Reifenäquator (C) und des Winkels θ2 des Karkassenkords (9b) der zweiten Lage (11) relativ zu dem Reifenäquator (C) 4 bis 20 Grad ist.

9. Motorradreifen (1) gemäß einem der Ansprüche 1 bis 8, wobei
erste Enden (E1), die die Anzahl der Karkassenkorde (9a) pro Umfangslängeneinheit der ersten Lage (10) sind, größer sind als zweite Enden (E2), die die Anzahl der Karkassenkorde (9b) pro Umfanglängeneinheit der zweiten Lage (11) sind.

10. Motorradreifen (1) gemäß einem der Ansprüche 1 bis 9, wobei
innere Enden (11i) der zweiten Lage (11) in der Reifenradialrichtung einwärts von Reifenmaximalbreitenpositionen (M) liegen.

11. Motorradreifen (1) gemäß einem der Ansprüche 1 bis 10, wobei
jeder umgeschlagene Abschnitt (13) der ersten Lage (10) die zweite Lage (11) um nicht weniger als 10 mm in der Reifenradialrichtung überlappt.

12. Motorradreifen (1) gemäß einem der Ansprüche 1 bis 11, wobei
eine Laufflächenverstärkungsschicht (7) in der Reifenradialrichtung auswärts der Karkasse (6) und innerhalb des Laufflächenabschnitts (2) vorgesehen ist, und
äußere Enden (13e) in der Reifenradialrichtung der umgeschlagenen Abschnitte (13) der ersten Lage (10) in der Reifenradialrichtung auswärts von äußeren Enden (7e) in der Reifenaxialrichtung der Laufflächenverstärkungsschicht (7) liegen.

## Revendications

1. Pneumatique de moto (1) ayant une carcasse (6), dans lequel :
la carasse (6) comprend un pli de carcasse (6A) qui est une couche de cordes de carcasse (9),
le pli de carcasse (6A) comprend un premier pli (10) et un second pli (11) déposé en couche sur le premier pli (10) dans une direction radiale du pneu,
le premier pli (10) comprend : une partie de corps toroïdale (12) s'étendant à partir d'une partie de bande de roulement (2) en passant par des parties de paroi latérale (3) jusqu'aux tringles (5) des parties de talon (4) ; et des parties retournées (13) retournées autour des tringles (5) d'un côté interne vers un côté externe dans une direction axiale du pneu,
le second pli (11) est formé comme une partie (14) s'étendant à partir de la partie de bande de roulement (2) vers les parties de talon (4) et se terminant sans être retournée autour des tringles (5), le pneumatique étant **caractérisé en ce que** :
un épaisseur de chaque corde de carcasse (9b) du second pli (11) est inférieure à une épaisseur de chaque corde de carcasse (9a) du premier pli (10).

2. Pneumatique de moto (1) selon la revendication 1, dans lequel :
la corde de carcasse (9) est formée à partir d'une fibre organique.

3. Pneumatique de moto (1) selon la revendication 1 ou 2, dans lequel :
le second pli (11) est disposé à l'extérieur du premier pli (10) dans la direction radiale du pneu.

4. Pneumatique de moto (1) selon l'une quelconque des revendications 1 à 3, dans lequel :
l'épaisseur de la corde de carcasse (9a) du premier pli (10) n'est pas inférieure à 1,4 fois l'épaisseur de la corde de carcasse (9b) du second pli (11).

5. Pneumatique de moto (1) selon l'une quelconque des revendications 1 à 4, dans lequel :
l'épaisseur de la corde de carcasse (9a) du premier pli (10) n'est pas inférieure à 1300 dtex.

6. Pneumatique de moto (1) selon l'une quelconque des revendications 1 à 5, dans lequel :
un angle de chaque corde de carcasse (9) par rapport à un équateur du pneu (C) est de 65 à 90 degrés.

7. Pneumatique de moto (1) selon l'une quelconque des revendications 1 à 6, dans lequel :
un angle θ1 de la corde de carcasse (9a) du premier pli (10) par rapport à un équateur du pneu (C) est supérieur à un angle θ2 de la corde de carcasse (9b) du second pli (11) par rapport à l'équateur du pneu (C).

8. Pneumatique de moto (1) selon la revendication 7, dans lequel :
une différence (θ1-θ2) entre l'angle θ1 de la corde de carcasse (9a) du premier pli (10) par rapport à l'équateur du pneu (C) et l'angle θ2 de la corde de carcasse (9b) du second pli (11) par rapport à l'équateur du pneu (C) est de 4 à 20 degrés.

9. Pneumatique de moto (1) selon l'une quelconque des revendications 1 à 8, dans lequel :
les premières extrémités (E1) qui sont le nombre de cordes de carcasse (9a) par longueur périphérique unitaire du premier pli (10), sont supérieures aux secondes extrémités (E2) qui sont le nombre de cordes de carcasse (9b) par longueur périphérique unitaire du second pli (11).

10. Pneumatique de moto (1) selon l'une quelconque des revendications 1 à 9, dans lequel :
les extrémités internes (11i) du second pli (11) sont positionnées vers l'intérieur des positions de largeur maximales (M) du pneu dans la direction radiale du pneu.

11. Pneumatique de moto (1) selon l'une quelconque des revendications 1 à 10, dans lequel :
chaque partie retournée (13) du premier pli (10) recouvre le second pli (11) selon une valeur non inférieure à 10 mm dans la direction radiale du pneu.

12. Pneumatique de moto (1) selon l'une quelconque des revendications 1 à 11, dans lequel :
une couche de renforcement de bande de roulement (7) est prévue vers l'extérieur de la carcasse (6) dans la direction radiale du pneu et à l'intérieur de la partie de bande de roulement (2), et
des extrémités externes (13e) dans la direction radiale du pneu des parties retournées (13) du premier pli (10) sont positionnées, dans la direction radiale du pneu, vers l'extérieur des extrémités externes (7e) dans la direction axiale du pneu de la couche de renforcement de bande de roulement (7) .
